# EUROPEAN PATENT APPLICATION

(11) **EP 0 919 287 A2**
(43) Date of publication of application: **02.06.1999**
(21) Application number: 98122240.9
(22) Date of filing: 23.11.1998
(51) Int. Cl.: B03C 3/82, B03C 3/60, F24F 3/16

(54) **Air conditioner with electrostatic dust collector**

(30) Priority: 26.11.1997 JP 324807/97
(71) Applicant: Funai Electric Co., Ltd., Daito-shi, Osaka 574-0013 (JP)
(72) Inventor: Hironaka, Yasumasa c/o Funai Electric Co., Ltd., Daito-shi, Osaka 574-0013 (JP); Tajika, Ayumi c/o Funai Electric Co., Ltd., Daito-shi, Osaka 574-0013 (JP)
(74) Representative: Schmitz, Hans-Werner, Dipl.-Ing.

(57) **Abstract**

In an air conditioner with electronic dust collector having an electronic dust collector incorporated in the casing of the interior unit of the air conditioner, electrification of the casing is prevented and dust is less apt to be adsorbed to the casing, thereby preventing generation of dust. Due to the electric line of force by the discharge effect of the dust collector, the casing per se tends to be electrified, but when the casing is grounded, static electricity of the casing can be eliminated, and accordingly, casing is prevented from soiling with dust or fine particles.

## Description

### BACKGROUND OF THE INVENTION

### 1. Field of the Invention

The present invention relates to an air conditioner with electronic dust collector.

### 2. Description of the Prior Art

Hitherto, there has been known an air conditioner which is incorporated with a deodorant device using a adsorptive catalyst or the like, besides the original air conditioning function, in the interior unit to enhance the function (ref. Japanese Patent Publication Unexamined HEI 6-180127). Likewise, there has been contrived to incorporate an electronic dust collector in the interior unit. The electronic dust collector is to cause generation of corona discharge by applying a high voltage between the discharge electrode and the dust collection electrode, ionize fine particles and dust in the surrounding air thereby, and to have the dust collection electrode adsorb them. Among such electronic dust collectors, there has been developed a maintenance-free type one in which the dust collection electrode is provided with a heater for self-cleaning so that the dust deposited on the dust collection electrode is burnt to remove.

However, in case such an electronic dust collector is incorporated in the interior unit of the air conditioner, because the use of the dust collection function by corona discharge, the body or the casing itself is charged with the electric line of force, thereby providing a problem such that dust is apt to lie in the vicinity of the inside and outside walls of the casing other than the dust collection electrode ad the air blow port to cause soiling to the neighborhood of the place.

### SUMMARY OF THE INVENTION

An object of the present invention is to provide an air conditioner with electronic dust collector having a constitution of the electronic dust collector incorporated in the casing of the interior unit of the air conditioner in which electrification of the casing is prevented and dust is less apt to be adsorbed to the casing, thereby preventing generation of dust.

In order to attain the above object, the present invention is constituted in that, in an air conditioner with electronic dust collector for conditioning air in a room and puritying air by collecting dust in air by the use of electric discharge effect, comprising: a easing having an air suction port and an air blow port; a heat exchanger provided in said casing facing to the suction port, a fan for circulating air into the blow port from the suction port through the air passages in the heat exchanger and the casing; and an electronic dust collector arrayed in said air passages for collecting dust in air which passes through the air passages by using the discharge effect, so that the casing can be grounded.

In the above constitution, the air taken in from the suction port during the air conditioning operation undergoes heat exchange through the heat exchanger to be cooled or heated, and further is discharged through the air passage in the casing. Simultaneously, by the operation of the electronic dust collector, dust or fine particles floating in air led through the air passage are electrified by adhesion of the ion or electron formed by the discharge effect of the dust collector, ion blow is generated, which is attracted to the dust collection electrode side of the dust collector to cause electric dust collection. Further, the casing per se tends to be electrified by the electric line of force by the discharge effect of the dust collector, but when the casing is grounded, static electricity of the casing can be eliminated, and accordingly, casing is prevented from soiling with dust or fine particles. Though it is desirable for the ground resistance of the casing to be small, the amount may be approximately 2 MΩ or less.

The dust collector may be one comprising a discharge electrode and a dust collection electrode which are provided at a predetermined distance and to which high voltage is applied. The dust collection electrode can be one provided with a heater for self-cleaning the same. By this constitution, the dust collection electrode is self-leaned to become maintenance-free state. Alternatively, a catalyst layer may be provided on the surface of the dust collection electrode. With this constitution, when air contains fine particles of odorous component, the odorous component is adsorbed by the catalyst layer and deodorized.

The air conditioner body containing the above casing may be so constituted as to be fixed to a wall through a fixing plate, with said fixing plate to be grounded. By this constitution, just by fixing the air conditioner body to the fixing plate the grounding of the casing can be easily realized, and the wall to which the air conditioner is fixed and the surroundings are made less apt to catch dust.

The above dust collector may be constituted in a manner to be fixed to a casing through a dust collector fixing plate, so that the dust collector fixing plate can be grounded. By this constitution, static electricity on the dust collector fixing plate can be eliminated, and deposition of dust on the dust collector fixing plate per se is suppressed. At the same time, the dust collector fixing plate has a function of the shield plate for heat for the heater for self-cleaning.

### BRIEF DESCRIPTION OF THE DRAWINGS

Hereinafter, an air conditioner with electronic dust collector according to a preferred embodiment of the present invention is illustrated with reference to the drawings.
Fig. 1 is a partially broken perspective view of an air conditioner with electronic dust collector according to an embodiment of the present invention.
Fig. 2 is a side view of an air conditioner with electronic dust collector showing the flow of air during air conditioning.
Fig. 3 is a partial perspective view of an electronic dust collector.
Fig. 4 is a partial side view of an electronic dust collector.
Fig. 5 is a partial bottom view of an electronic dust collector.
Fig. 6 is a sectional view of an essential part of the dust collector.

### DETAILED DESCRIPTION OF THE PREFERRED EMBODIMENT OF THE PRESENT INVENTION

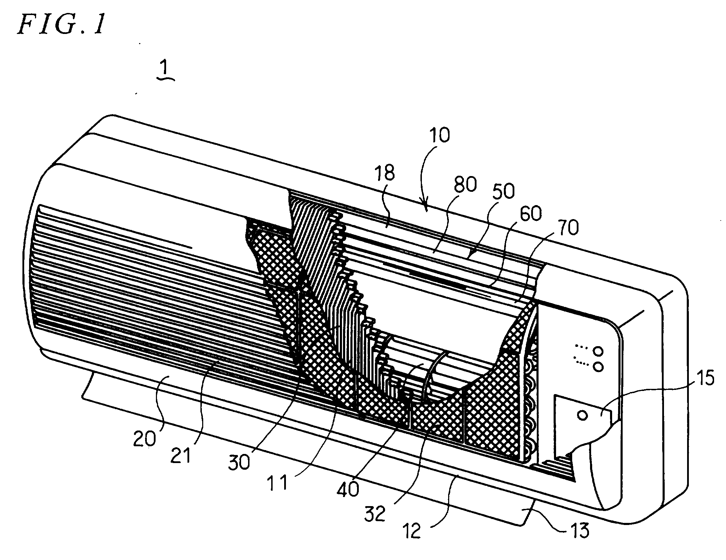

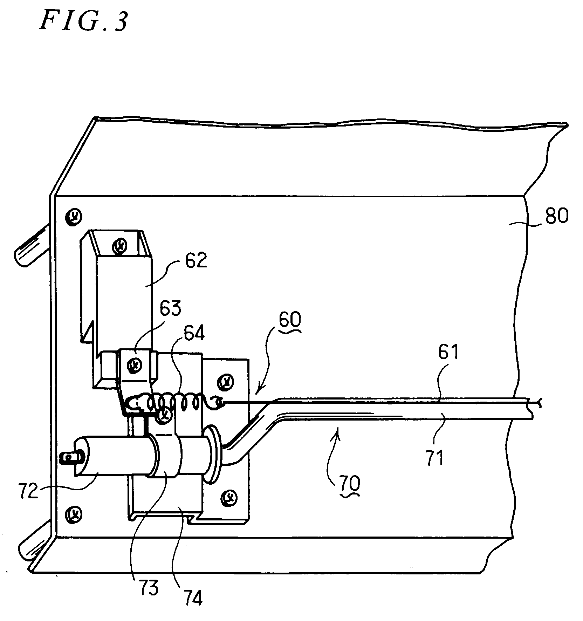

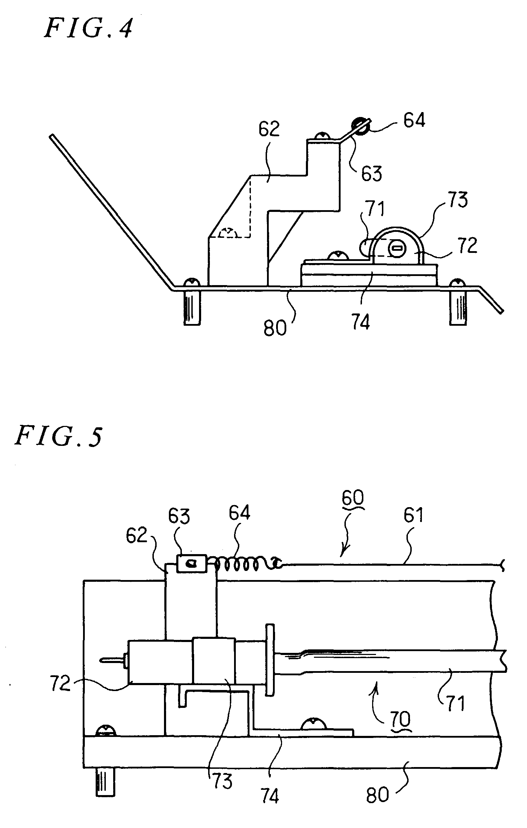

Referring to Fig. 1 through Fig. 5, an air conditioner with dust collector 1 has both the air conditioning function for cooling or heating air in room and the dust collection function for removing dust contained in interior air to clean air, and is to be fixed to wall or the like through a fixing plate 2. The air conditioner 1 has a casing 10 which opens at its front face as an air inlet 11 and provided with an air blow port 12 beneath it, a front panel 20 having a front grill 21 and to be fitted to the air inlet 11 of the casing 10, a heat exchanger 30 provided in the casing 10 facing the inlet 11 of the casing 10, a cross-flow type fan 40 provided on the depth side of the blow port 12 so as to circulate air from the inlet 11 to the blow port 12 through the heat exchanger 30, and an electronic dust collector 50 disposed on the air path 31 on the rear face side of the heat exchanger 30. A filter 32 is provided between the front panel 20 and the heat exchanger 30. An angle adjusting type looper 13 is provided at the blow port 12 of the casing 10. In the casing 10 there is provided a control circuit 15 (control means) for controlling the whole of the air conditioner 1. The heat exchanger 30 is connected by a heat exchanger of a external unit (not illustrated) and a coolant pipe.

The electronic dust collector 50 is constituted by a horizontally stretched linear discharge electrode 60, a bar-like dust collection electrode 70 which is provided at a predetermined distance from the discharge electrode 60 and which contains a sheathed heater 71 for self-cleaning, and a heat shielding plate 80 (a dust collector plate for shielding heat of the sheathed heater 71 of the dust collection electrode 70 and holding the discharge electrode 60 and the dust collection electrode 70). The discharge electrode 60 and the dust collection electrode 70 are fixed to the surface of the vertical back plate part 18.

The discharge line 61 which constitutes a discharge electrode 60 is held through a tensile spring 64 to the electrode 63 which is fixed at both ends to the holding member 62, and fixed at a set position by the tension of the tensile spring 64. To the discharge line 61 a voltage is applied from the electrode 63 through the tensile spring 64. The dust collection electrode 70 is disposed on the downstream side of the air path 31 to the discharge electrode 60 at a predetermined distance, and the lengthwise end parts 72 of dust collection electrode 70 are fixed to the holding members 74 by the stopper members 73. To the discharge electrode 60 and the dust collection electrode 70 the positive DC voltage and the negative DC voltage are to be applied, respectively at the time of the air purification motion. The holding member 62 and the holding member 74 are to be fixed to the heat shielding plate 80.

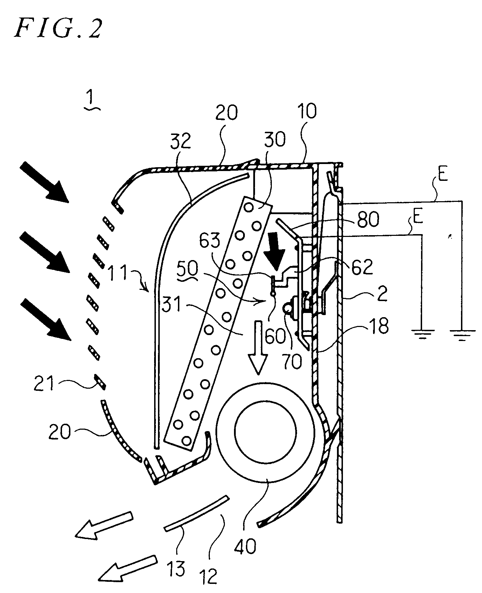

Further, the construction is such that the casing 10 which is a body of the air conditioner 1 can be grounded. The casing 10 is electrified by the electric line force by the discharge of the dust collector 50 disposed inside, because of which it is liable to be soiled by adhesion of dust. Accordingly, the static electricity of the casing 10 is to be eliminated by grounding. Concretely, the casing 10 per se may be grounded, but as shown in Fig. 2, the fixing plate 2 and/or the heat shielding plate 80 may be grounded by the earth line E. These grounding resistances are desirably small, where the amount lower than about 2 MΩ may be acceptable.

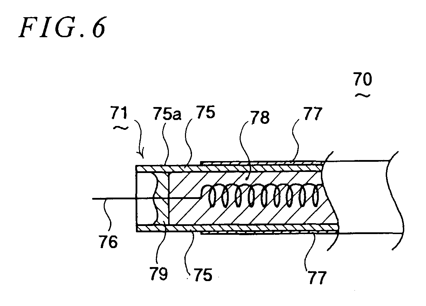

Fig. 6 is a sectional view of the essential part of the dust collection electrode constituting the electronic dust collector. The dust collection electrode 70 self-contains a sheathed heater 71. The sheathed heater 71 comprises an aluminum metal tube 75 and an electric resistance line 76 inserted in the metal tube 75. On the surface of the metal tube 75 there are formed the catalyst layers 77 comprising the catalytic substances represented by zeolite, active alumina, manganese dioxide, etc. are formed by application or welding. Zeolite (generally called zeolite) has a three-dimensional net structure having hollow parts, which accelerate the reaction of the molecules adsorbed to the inside of the hollow part. The active alumina (Al₂O₃) is alumina powder having high adsorption capacity; it has small crystal particle size, large surface area, and is suitable as a catalyst, catalyst carrier, and adsorbing agent. Manganese dioxide (MnO₂) has a function as a catalyst in the same manner as in zeolite and active alumina as stated above. Further, in order to prevent mutual contact between the metal tube 75 and the electric resistance line 76, magnesium oxide 78 is filled in the metal tube 75. The end part 75a of the metal tube 75 is sealed by the glass sealing member 79. This sheathed heater 71 may be of small energy per unit area, e.g., approximately 180W (Watt).

Next, the operation of the air conditioner 1 with dust collector constituted as above is described. During the air conditioning, by operating the heat exchanger 30 and the fan 40, air in the room passes through the front grill 21 of the front panel 20 and the filter 32 and is introduced in the casing 10, and after being cooled or heated in the course of the passage through the heat exchanger 30, it flows through the air passage 31 of the back side vertically down from above. The air which passes through the air passage 31 passes the peripheral part of the dust collector 50. Here, a high voltage is applied to the position between the discharge electrode 60 and the dust collection electrode 70 of the dust collector 50 to generate corona discharge between the two electrodes 60 and 70. As a result, dust such as fine particles of tar (oil smoke) of tobacco present in the surrounding air of the discharge electrode 60 or cotton dust has deposition of positive ion formed by corona, and the fine particles and dust are positively charged. As a result, they are attracted by the Coulomb force between the two electrodes toward the dust collection electrode 70 and caught by the dust collection electrode 70 to effect electric dust collection. In case the fine particles of odorous components are contained in air, the odorous components are adsorbed by the catalyst layer 77 of the dust collection electrode 70 and deodorized. Thus, the air which passed through the heat exchanger 30 is purified in the course of passing through the air passage 31 on the back side thereof and discharged into the room through the air blow port 12.

Here, because the dust collection electrode 70 is disposed by displacing to the lee side of the discharge electrode 60, by the wind force of air flowing through the air passage 31 and Coulomb force sustained by dust from the dust collection electrode 70, the dust is to be directed toward the dust collection electrode 70. By this step, it becomes possible to have a larger amount of dust deposited on the dust collection electrode 70 to improve the dust collection effect by the dust collector 50.

Besides, by controlling the application of electricity to the heater 71 of the dust collection electrode 70 so as to increase its temperature slowly, dust of soot or cotton dust which adhered to the surface of the dust collection electrode 70 is gradually decomposed by oxidation under the catalytic action of the catalyst and finally converted to colorless, odorless carbon dioxide ad vapor at about the temperature exceeding 300°C and removed from the dust collection electrode 70. As such, by oxidizing the dust stepwise, the dust collection electrode 70 can be cleaned while suppressing generation of smoke and odor resulting from firing of dust. The ultimate temperature is desirably controlled to a level lower than about 400°C which is the lower limit of the firing temperature of the substance contained in the dust.

Also, by grounding the fixing plate 2 of the casing 10 and/or the heat shielding plate 80 by the earth line E, static electricity charged thereon can be eliminated. As a result, adhesion of dust and fine particles to them can be suppressed to make it possible to prevent their soiling. Further, by grounding the fixing plate 2, the casing 10 and the peripheral part thereof can be readily grounded by simply fixing the body of the air conditioner 1 to the fixing plate 2.

Without being limited to the foregoing embodiment, various modifications are feasible in the present invention. For example, in the above embodiment, there is shown about the self-cleaning of the electronic dust collection electrode provided on the air conditioner, but the invention may be applied to the reproduction method for the catalyst of the deodorizing apparatus of adsorptive type thermal decomposition system.

## Claims

1. An air conditioner with electronic dust collector for conditioning air in a room and purifying air by collecting dust in air by the use of electric discharge effect, comprising:
a casing having an air suction port and an air blow port;
a heat exchanger provided in said casing facing to the suction port;
a fan for circulating air into the blow port from the suction port through the air passages in the heat exchanger and the casing; and
an electronic dust collector arrayed in said air passages for collecting dust in air which passes through the air passages by using the discharge effect,
characterized by constituting so that the casing can be grounded.

2. The air conditioner with electronic dust collector according to claim 1, wherein the dust collector comprises a discharge electrode and a dust collection electrode which are provided at a predetermined distance and are to sustain application of high voltage, with the dust collection electrode being furnished with a heater for self-cleaning the dust collection electrode.

3. The air conditioner with electronic dust collector according to claim 2, wherein a catalyst layer is provided on the surface of the dust collection electrode.

4. The air conditioner with electronic dust collector according to any one of claims 1 to 3, wherein the air conditioner body including said casing is fixed to the wall through a fixing plate, with said fixing plate being constituted to be grounded.

5. The air conditioner with electronic dust collector according to any one of claims 1 to 3, wherein the dust collector is fixed to the casing through a dust collector fixing plate, and said dust collector fixing plate is constituted to be grounded.

6. An air conditioner with electronic dust collector for conditioning air in a room and purifying air by collecting dust in air by the use of electric discharge effect, comprising:
a casing having an air suction port and an air blow port;
a heat exchanger provided in said casing facing to the suction port;
a fan for circulating air into the blow port from the suction port through the air passages in the heat exchanger and the casing; and
an electronic dust collector arrayed in said air passages for collecting dust in air which passes through the air passages by using the discharge effect,
characterized by constituting so that the dust collector can be grounded.

7. The air conditioner with electronic dust collector according to claim 6, wherein the dust collector comprises a discharge electrode and a dust collection electrode which are provided at a predetermined distance and are to sustain application of high voltage, with the dust collection electrode being furnished with a heater for self-cleaning the dust collection electrode.

8. The air conditioner with electronic dust collector according to claim 7, wherein a catalyst layer is provided on the surface of the dust collection electrode.

9. The air conditioner with electronic dust collector according to any one of claims 6 to 8, wherein the dust collector is fixed to the casing through a dust collector fixing plate, and said dust collector fixing plate is constituted to be grounded.

10. The air conditioner with electronic dust collector according to claim 9, wherein the dust collector fixing plate comprises a heat shielding plate holding the discharge electrode and the dust collection electrode.
